# EUROPÄISCHE PATENTSCHRIFT

(11) **EP 0 755 824 B1**
(45) Veröffentlichungstag und Bekanntmachung des Hinweises auf die Patenterteilung: **22.09.1999**
(21) Anmeldenummer: 95111884.3
(22) Anmeldetag: 28.07.1995
(51) Int. Cl.: B60N 2/22

(54) **Fahrzeugsitz**
Vehicle seat
Siège pour véhicule

(43) Veröffentlichungstag der Anmeldung: 29.01.1997
(73) Patentinhaber: Keiper GmbH & Co., 67657 Kaiserslautern (DE)
(72) Erfinder: Schüler Rolf, Dipl.-Ing., D-42579 Heiligenhaus (DE); Voss Heinz, Dr.-Ing., D-51375 Leverkusen (DE); Nottebaum Thorsten, Dr. Ingenieur, D-42899 Remscheid (DE); Lehmann Ulrich, Dipl.-Ing., D-53347 Alfter-Bonn (DE)
(74) Vertreter: Patentanwälte Bartels und Partner

(56) Entgegenhaltungen:
- EP-A- 0 233 822
- EP-A- 0 308 374
- WO-A-96/18519
- AU-A- 2 051 767
- GB-A- 1 222 780
- GB-A- 2 051 220
- GB-A- 2 257 904
- US-A- 4 884 844

## Beschreibung

Die Erfindung betrifft einen Fahrzeugsitz, insbesondere einen Kraftfahrzeugsitz, bestehend aus einzelnen Baugruppen, zu denen der Sitzteil, die Rückenlehne und letztere um eine in Sitzquerrichtung verlaufende Schwenkachse schwenkbar und in wählbarer Neigungslage feststellbar mit dem Sitzteil verbindende Gelenkbeschläge gehören.

Die bekannten Gelenkbeschläge dieser Art lassen sich in wenigstens zwei Gruppen einordnen. Zu der einen Gruppe gehören die sogenannten Getriebebeschläge, bei denen der mit der Rückenlehne verbundene Beschlagteil relativ zu dem mit dem Sitzteil verbundenen Beschlagteil mittels eines Getriebes geschwenkt und, falls das Getriebe nicht selbsthemmend ist, mittels einer Bremse festgestellt wird, wobei das Getriebe von Hand, beispielsweise mit Hilfe eines Handrades, oder mittels eines Motors angetrieben wird. Die Einstellung der Lehnenneigung ist bei diesen Getriebebeschlägen stufenlos möglich. Zu der anderen Gruppe gehören die sogenannten Rastbeschläge, bei denen der mit der Rückenlehne verbundene obere Beschlagteil formschlüssig mittels Rastelementen mit dem mit dem Sitzteil verbundenen unteren Beschlagteil verriegelbar ist. Um den oberen Beschlagteil relativ zum unteren Beschlagteil schwenken zu können, müssen die Rastelemente in ihre Freigabestellung gebracht werden, beispielsweise mittels eines von Hand betätigbaren Hebels, der um die Gelenkachse schwenkbar ist. Die Rastvorrichtung kann so ausgetung kann so ausgebildet sein, daß nur eine stufenweise Veränderung der Schwenklage des oberen Beschlagteils möglich ist. Es sind aber auch Rastbeschläge bekannt, bei denen eine stufenlose Einstellung der Neigungslage der Rückenlehne möglich ist.

Da es Personen gibt, welche einen Getriebebeschlag bevorzugen und solche, welche einem Rastbeschlag den Vorzug geben, liegt der Erfindung die Aufgabe zugrunde, einen Fahrzeugsitz zu schaffen, mit dem möglichst kostengünstig den unterschiedlichen Wünschen Rechnung getragen werden kann. Die Aufgabe löst ein Fahrzeugsitz mit den Merkmalen des Anspruches 1.

Dadurch, daß die für die Verbindung der Rückenlehne mit dem Sitzteil erforderlichen beiden Gelenkbeschläge aus wenigstens zwei Gruppen auswählbar sind, von denen die eine Getriebebeschläge und die andere Rastbeschläge umfaßt, die Sitze also nicht mehr an die unterschiedlichen Gelenkbeschläge angepaßt sein müssen, kann bei dem erfindungsgemäßen Fahrzeugsitz die Rückenlehne bei der Sitzmontage entweder mittels eines Getriebebeschlages oder mittels eines Rastbeschlages mit dem Sitzteil verbunden werden. Man kann sogar infolge der Auswählbarkeit der Gelenkbeschläge auch später diejenigen der einen Gruppe gegen solche der anderen Gruppe austauschen, sofern lösbare Verbindungen zwischen den Gelenkbeschlägen und dem Sitzteil sowie der Rückenlehne vorgesehen sind. Unter Getriebebeschlägen sind hierbei solche Beschläge zu verstehen, bei denen eine Schwenkbewegung des einen Beschlagteils relativ zum anderen Beschlagteil in Stufen oder stufenlos mit Hilfe eines Antriebselementes über ein Getriebe erfolgt, das jede beliebige Ausbildung aufweisen kann, wobei es sich bei dem Antriebselement um ein manuell zu betätigendes Element, insbesondere ein Handrad, oder um einen Motor handeln kann. Das Getriebe kann selbsthemmend sein. Ist es nicht selbsthemmend, kann die Feststellung der beiden Beschlagteile mittels einer lösbaren Bremse erfolgen. Unter Rastbeschlägen werden solche Beschläge verstanden, bei denen zur Feststellung des mit der Rückenlehne zu verbindenden Beschlagteils relativ zueinander bewegbare Rastelemente vorgesehen sind, die in ihrer Sperrstellung zusammenwirken und in ihrer Freigabestellung eine Schwenkbewegung der beiden Beschlagteile relativ zueinander zulassen. Für die Betätigung der Rastelemente ist ein Betätigungsglied vorhanden, das manuell oder motorisch betätigt wird. Die Einstellbarkeit des einen Beschlagteiles relativ zum anderen kann stufenlos oder nur in Stufen möglich sein. Sofern keine separate Vorholfeder für die Rückenlehne vorhanden ist, kann eine Vorholfeder, welche die Rückenlehne nach vorne zu schwenken sucht, in den Rastbeschlag integriert sein.

Bei einer bevorzugten Ausführungsform ist die Lage der Schwenkachse bezüglich des Sitzteils und der Rückenlehne unabhängig davon, welche Art von Gelenkbeschlägen ausgewählt wurde. Der Sitzkomfort, der auch von der Lage der Schwenkachse abhängig ist, bleibt also von der Wahl der Gelenkbeschläge unberührt.

Damit weder der Sitzteil noch die Rückenlehne mit unterschiedlichen Anschlußstellen für die unterschiedlichen Gelenkbeschläge versehen zu sein brauchen, sind vorzugsweise die Anschlußmaße beider Arten von Gelenkbeschlägen gleich.

Im folgenden ist die Erfindung an Hand eines in der Zeichnung dargestellten Ausführungsbeispiels im einzelnen erläutert. Es zeigen
- Fig. 1: eine schematisch dargestellte Seitenansicht eines Ausführungsbeispiels mit Rastbeschlägen zur Verbindung der Rückenlehne mit dem Sitzteil,
- Fig. 2: eine Ansicht des einen Rastbeschlags des Ausführungsbeispiels,
- Fig. 3: eine entsprechende Ansicht eines statt des Rastbeschlags gemäß Fig. 2 wählbaren Getriebebeschlages,
- Fig. 4: eine Ansicht der Rastvorrichtung des Rastbeschlages gemäß Fig. 2,
- Fig. 5: eine Ansicht des Getriebes des Getriebebeschlags gemäß Fig. 3.

Ein als Ganzes mit 1 bezeichneter Sitzteil eines Kraftfahrzeugsitzes weist ein Sitzteilpolster 2 auf, das von einem nicht dargestellten Polsterträger getragen wird, der direkt oder indirekt mit einem Sitzgestell 3 verbunden ist. Eine indirekte Verbindung besteht dann, wenn der Sitzteil einen Höheneinsteller, einen Neigungseinsteller oder beide Einsteller aufweist und diese zwischen dem Sitzgestell 3 und dem Polsterträger des Sitzteilpolsters 2 angeordnet sind.

Im Bereich des hinteren Endes des Sitzgestells 3 ist an beiden Seiten desselben der untere Beschlagteil 4 je eines Gelenkbeschlages 5 befestigt. Der obere Beschlagteil 6 der beiden gleich ausgebildeten Gelenkbeschläge 5 ist auf der einen bzw. anderen Seite einer als Ganzes mit 7 bezeichneten Rückenlehne mit deren Polsterträger 8 derart verbunden, daß die Rückenlehne 7 um eine in Sitzquerrichtung verlaufende Achse 9 relativ zum Sitzteil 1 verschwenkt werden kann.

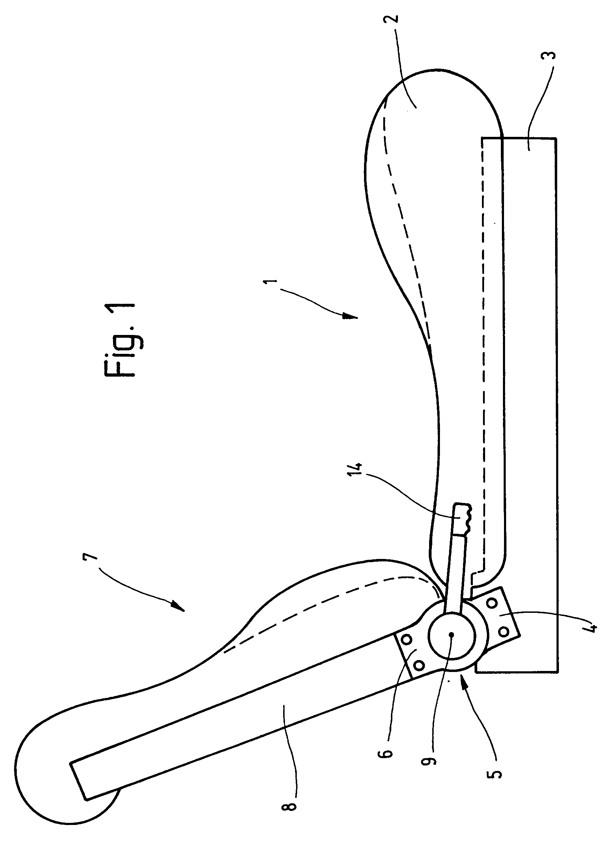

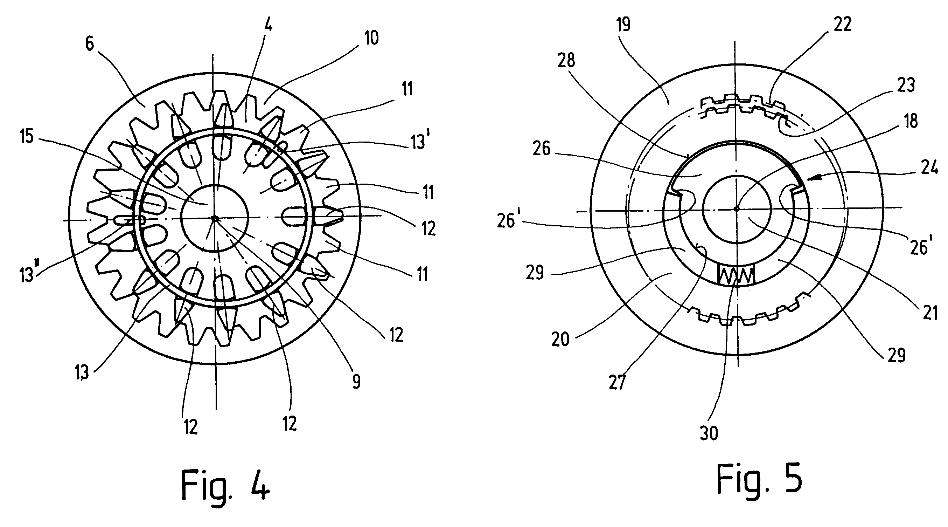

Um die Neigungslage der Rückenlehne 7 stufenlos verändern zu können, weist der Gelenkbeschlag 5 eine Rastvorrichtung auf, die in Fig. 4 schematisch dargestellt ist. Eine zur Achse 9 konzentrische Innenverzahnung 10, welche gleichmäßig über den Umfang verteilt angeordnete und radial nach innen sich öffnende Rastöffnungen 11 bildet, ist am einen der beiden Beschlagteile, im Ausführungsbeispiel am oberen Beschlagteil 6, vorgesehen. Diese Innenverzahnung 10 kann an einem fest mit dem Beschlagteil verbundenen Ring oder unmittelbar am Beschlagteil vorgesehen sein. Der andere Beschlagteil, im Ausführungsbeispiel der untere Beschlagteil 4, ist mit radial verlaufenden Führungen für je einen Rastkörper 12 versehen. Diese gleichmäßig über den Umfang verteilt angeordneten Rastkörper 12 verjüngen sich in dem in Eingriff mit den Rastöffnungen 10 kommenden Endabschnitt keilförmig radial nach außen hin, während die Rastöffnungen 11 sich keilförmig radial nach innen öffnen. Die Anzahl der Rastöffnungen 10 und diejenige der Rastkörper 12 sowie das Verhältnis der beiden Zahlen sind so gewählt, daß in jeder beliebigen Schwenklage des oberen Beschlagteils 6 zumindest zwei der Rastkörper 12 teilweise in zwei der Rastöffnungen 11 einfallen und den oberen Beschlagteil 6 in beiden Drehrichtungen spielfrei mit dem unteren Beschlagteil 4 verriegeln können. Die in der Form von Schiebern ausgebildeten Rastkörper 12 werden von einer vorgespannten Ringfeder 13, welche sich über mehr als eine Windung erstreckt, radial nach außen gedrückt, wenn ein Betätigungshebel 14 unbetätigt ist, welcher schwenkbar auf einem Gelenkzapfen 15 gelagert ist, der die beiden Beschlagteile gelenkig verbindet und die Achse 9 definiert. Das eine Ende 13' der Ringfeder 13 ist in Umfangsrichtung unbeweglich, aber radial verschiebbar mit dem unteren Beschlagteil 4 verbunden, während das Ende 13'' in Umfangsrichtung beweglich und radial verschiebbar mit dem Betätigungshebel 14 verbunden ist. Wird letzterer nach oben gezogen, bei einer Blickrichtung gemäß Fig. 1 also entgegen dem Uhrzeigersinn geschwenkt, dann wird das Ende 13'' der Ringfeder 13 entgegen dem Uhrzeigersinn bei einer Blickrichtung gemäß Fig. 4 mitgenommen und dadurch die Ringfeder 13 stärker gespannt. Dies hat zur Folge, daß sie sich zusammenzieht und dabei alle Rastkörper 12 außer Eingriff mit den Rastöffnungen 11 bringt. Die Rückenlehne 7 kann nun um einen beliebig großen Winkel relativ zum Sitzteil 1 verschwenkt werden. Wenn die gewünschte neue Schwenkstellung erreicht ist, braucht nur der Betätigungshebel 14 freigegeben zu werden. Die Ringfeder 13 entspannt sich dann, wobei wenigstens zwei der Rastkörper 12 zumindest unvollständig in zwei der Rastöffnungen 11 einfallen und die beiden Beschlagteile 4 und 7 wieder spielfrei und in beiden Richtungen formschlüssig verriegeln. Außerdem wird der Betätigungshebel 14 wieder in seine Ausgangslage zurückgeschwenkt.

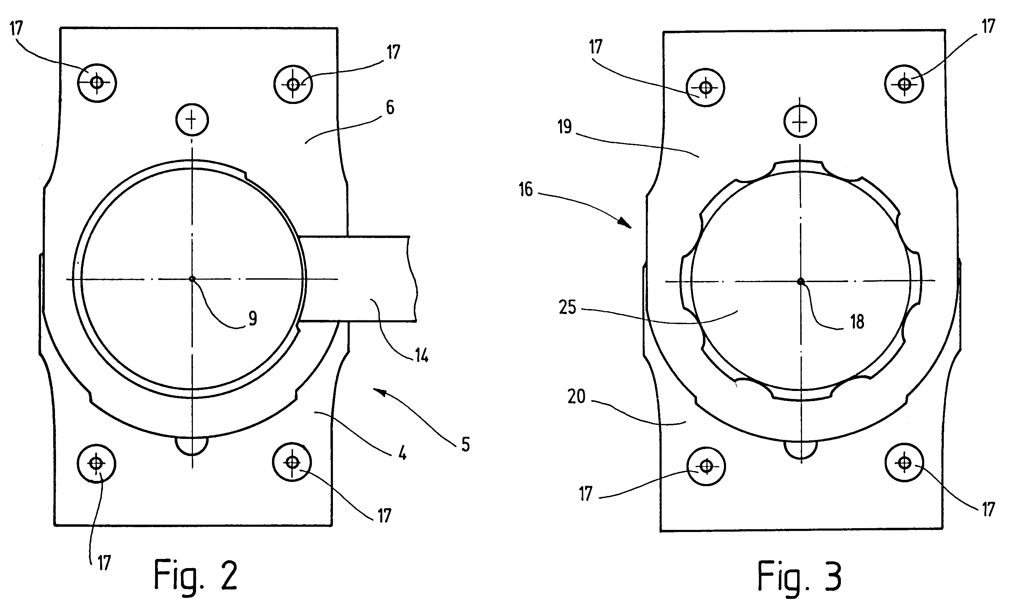

Sofern der Sitz mit einem Gelenkbeschlag 16 ausgerüstet werden soll, der als sogenannter Getriebebeschlag ausgebildet ist, bedarf es hierzu weder einer Änderung des Sitzgestells 3 noch einer Änderung des Polsterträgers 8 der Rückenlehne 7. Der als Rastbeschlag ausgebildete Gelenkbeschlag 5 und der als Getriebebeschlag ausgebildete Gelenkbeschlag 16 haben nämlich, wie die Fig. 2 und 3 zeigen, die gleichen Außen- und Anschlußmaße, insbesondere die gleiche Lage der als Bohrungen 17 dargestellten Anschlußstellen, und zwar auch bezüglich der theoretischen Achse 9 bzw. 18. Die beiden Gelenkbeschläge 5 und 16 sind im Ausführungsbeispiel nicht nur deckungsgleich hinsichtlich der Lage der Anschlußstellen und der theoretischen Achsen 9 bzw. 18. Sie haben auch die gleiche Außenkontur und, abgesehen von dem Betätigungshebel 14 und dem Handrad 25, das gleiche Aussehen. Die Montage des Sitzes erfährt keine Veränderung, wenn statt des Gelenkbeschlages 5 der Gelenkbeschlag 16 montiert wird oder umgekehrt. Sofern die Beschlagteile lösbar mit dem Sitzgestell 3 bzw. dem Polsterträger 8 der Rückenlehne 7 verbunden sind, kann sogar nachträglich ein Getriebebeschlag gegen einen Rastbeschlag und umgekehrt ausgetauscht werden.

Das in Fig. 5 dargestellte Getriebe des Gelenkbeschlages 16 weist eine konzentrisch zum Gelenkzapfen 21 angeordnete, nur unvollständig gezeichnete Innenverzahnung 22 auf. Diese Innenverzahnung 22 kann an einem fest mit dem einen Beschlagteil, im Ausführungsbeispiel dem oberen Beschlagteil 19, verbundenen Ring oder am Beschlagteil selbst vorgesehen sein. Exzentrisch zu dieser Innenverzahnung 22 ist eine ebenfalls nur unvollständig gezeichnete Außenverzahnung 23 angeordnet, wobei die Exzentrizität so groß gewählt ist, daß stets nur einige der Zähne der Außenverzahnung 23 in Eingriff mit den Zähnen der Innenverzahnung 22 sind. Die Außenverzahnung 23 kann an einem fest mit dem anderen Beschlagteil, im Ausführungsbeispiel dem unteren Beschlagteil 20, verbundenen Ring oder auch am Beschlagteil selbst vorgesehen sein. Der mit der Außenverzahnung 23 versehene Beschlagteil ist auf einem als Ganzes mit 24 bezeichneten Exzenter drehbar gelagert. Wenn der Exzenter 24 durch eine Drehbewegung des Gelenkzapfens 21 um einen entsprechenden Winkel gedreht wird, wandert auch der Bereich der beiden Verzahnungen, indem diese in Eingriff miteinander stehen, um denselben Winkel, wie dies von Umlaufgetrieben bekannt ist. Der Antrieb des Gelenkzapfens 21 erfolgt mit Hilfe eines fest mit dem Gelenkzapfen 21 verbundenen Handrades 25, das in beiden Drehrichtungen gedreht werden kann, um die Schwenklage der Rückenlehne 7 in einem bzw. anderen Sinne zu verändern, könnte aber auch mittels eines Motors erfolgen.

Die Differenz der Zähnezahlen ist zusammen mit der Lagerreibung so gewählt, daß das Getriebe selbsthemmend ist. Bei einem Antrieb mittels eines ein selbsthemmendes Getriebe aufweisenden Getriebemotors braucht das von den beiden Zahnrädern gebildete Umlaufgetriebe nicht selbsthemmend zu sein.

Im Ausführungsbeispiel ist der Getriebebeschlag mit einer Einrichtung versehen, welche die beiden Verzahnungen 22 und 23 in spielfreiem Eingriff hält, solange das Getriebe in Ruhe ist. Der Exzenter 24 weist deshalb eine drehfest auf dem Gelenkzapfen 21 angeordnete Scheibe 26 auf, die, ausgehend von der Stelle größter Exzentrizität des Exzenters 24 in beiden Richtungen über gleich große Winkel, die zusammen mehr als 180° betragen, statt einer exzentrischen Mantelfläche eine zentrische Mantelfläche 27 mit kleinerem Radius besitzt. In den beiden dadurch vorhandenen, zur Stelle größter Exzentrizität sich verbreiternden Zwischenräumen zwischen der zentrischen Mantelfläche 27 und der Lagerfläche 28 des unteren Beschlagteils 20 sind zwei spiegelbildlich gleich ausgebildete, im wesentlichen an die Form dieser Räume angepaßte Keilsegmente 29 angeordnet, zwischen denen sich eine vorgespannte Schraubendruckfeder 30 befindet, welche die beiden Keilsegmente 29 soweit in die genannten Zwischenräume hineindrückt, daß die Innenverzahnung 22 spielfrei in die Außenverzahnung 23 eingreift.

Wird der Gelenkzapfen 21 in der einen oder anderen Richtung gedreht, bewirkt einer der beiden Anschläge 26' der Scheibe 26, daß das eine der beiden Keilsegmente 29 von diesem Anschlag und das andere Keilsegment 29 vom erstgenannten Keilsegment 29 über die Schraubendruckfeder 30 mitgenommen wird, wodurch auch die Exzentrizität auf eine Wert reduziert wird, der das für den Lauf des Getriebes erforderliche Spiel ergibt. Erst wenn das Getriebe wieder zur Ruhe kommt, beseitigen die beiden Keilsegmente 29 aufgrund der Kraft der Schraubendruckfeder 30 wieder dieses Spiel vollständig.

## Patentansprüche

1. Fahrzeugsitz, insbesondere Kraftfahrzeugsitz, bestehend aus einzelnen Baugruppen, zu denen der Sitzteil, die Rückenlehne und letztere um eine in Sitzquerrichtung verlaufende Schwenkachse schwenkbar und in wählbaren Neigungslagen feststellbar mit dem Sitzteil verbindende Gelenkbeschläge gehören, dadurch gekennzeichnet, daß die Gelenkbeschläge (5; 16) aus wenigstens zwei Gruppen auswählbar sind, von denen die eine Getriebebeschläge (16) und die andere Rastbeschläge (5) umfaßt, die untereinander austauschbar sind**.**

2. Fahrzeugsitz nach Anspruch 1, dadurch gekennzeichnet, daß die Lage der Schwenkachse (9; 18) bezüglich des Sitzteils (1) und der Rückenlehne (7) unabhängig davon ist, welcher Art von Gelenkbeschlägen (5; 16) vorgesehen ist.

3. Fahrzeugsitz nach Anspruch 1 oder 2, dadurch gekennzeichnet, daß die Anschlußmaße beider Arten von Gelenkbeschlägen (5; 16) gleich sind.

4. Fahrzeugsitz nach einem der Ansprüche 1 bis 3, dadurch gekennzeichnet, daß sowohl die Getriebebeschläge (16) als auch die Rastbeschläge (5) eine Ausbildung haben, die eine stufenlose Einstellung der Neigungslage der Rückenlehne (7) gestattet.

5. Fahrzeugsitz nach einem der Ansprüche 1 bis 4, dadurch gekennzeichnet, daß sowohl die Getriebebeschläge (16) als auch die Rastbeschläge (5) eine Ausbildung haben, die eine spielfreie Feststellung der Rückenlehne (7) gestattet.

## Claims

1. Vehicle seat, in particular a motor vehicle seat, consisting of individual assembly groups which include the seat part, the backrest and binge fittings connecting the latter to the seat part such that it can pivot about a pivot axis, which extends in the transverse direction of the seat, and can be fixed in selectable inclined positions, characterized in that the hinge fittings (5; 16) can be selected from at least two groups, one of which comprises gear fittings (16) and the other detent fittings (5), which can be interchanged.

2. Vehicle seat according to claim 1, characterized in that the position of the pivot axis (9; 18) relative to the seat part (1) and the backrest (7) does not depend on the type of hinge fittings (5; 16) which is provided.

3. Vehicle seat according to claim 1 or 2, characterised in that the connection dimensions of both types or hinge fittings (5; 16) are the same.

4. Vehicle seat according to any one of claims 1 to 3, characterised in that both the gear fittings (16) and the detent fittings (5) are formed 50 as to allow the inclined position of the backrest (7) to be continuously adjusted.

5. Vehicle seat according to any one of claims 1 to 4, characterised in that both the gear fittings (16) and the detent fittings (5) are formed so as to allow the backrest (7) to be fixed free from play.

## Revendications

1. Siège de véhicule, notamment siège de véhicule automobile, constitué de sous-groupes individuels dont font partie la partie d'assise, le dossier et des ferrures d'articulation reliant ce dernier à la partie d'assise de manière pivotante autour d'un axe de pivotement s'étendant dans la direction transversale du siège, et de manière à pouvoir être immobilisé dans des positions d'inclinaison pouvant être choisies,
**caractérisé** en ce que les ferrures d'articulation (5 ; 16) peuvent être choisies à partir d'au moins deux groupes dont l'un comprend des ferrures à transmission (16) et l'autre des ferrures à encliquetage (5), qui sont interchangeables entre-elles.

2. Siège de véhicule selon la revendication 1, **caractérisé** en ce que la position de l'axe de pivotement (9 ; 18) par rapport à la partie d'assise (l) et au dossier (7) est indépendante du type des ferrures d'articulation (5 ; 16) qui sont prévues.

3. Siège de véhicule selon la revendication 1 ou 2, **caractérisé** en ce que les dimensions de raccordement des deux types de ferrures d'articulation (5 ; 16) sont identiques.

4. Siège de véhicule selon l'une des revendications 1 à 3, **caractérisé** en ce qu'aussi bien les ferrures à transmission (16) que les ferrures à encliquetage (5) ont une configuration, qui permet un réglage en continu de la position d'inclinaison du dossier (7).

5. Siège de véhicule selon l'une des revendications 1 à 4, **caractérisé** en ce qu'aussi bien les ferrures à transmission (16) que les ferrures à encliquetage (5) ont une configuration, qui permet une immobilisation sans jeu du dossier (7).
